# EUROPÄISCHE PATENTSCHRIFT

(11) **EP 0 678 633 B1**
(45) Veröffentlichungstag und Bekanntmachung des Hinweises auf die Patenterteilung: **22.03.2000**
(21) Anmeldenummer: 94115551.7
(22) Anmeldetag: 04.10.1994
(51) Int. Cl.: E04B 1/74, F24J 2/04, F24J 2/48, F24J 3/08

(54) **Bauwerk aus mehreren gesonderten Wärmeenergie absorbierenden Betonfertigteilen**
Building made of several separate prefabricated concrete elements absorbing thermal energy
Bâtiment constitué de plusieurs éléments particuliers préfabriqués en béton, collecteurs d'énergie thermique

(30) Priorität: 28.03.1994 DE 4410689
(43) Veröffentlichungstag der Anmeldung: 25.10.1995
(73) Patentinhaber: Betonbau GmbH, D-68753 Waghäusel (DE)
(72) Erfinder: Primus, Illo-Frank, Dr.-Ing., D-76327 Pfinztal (DE); Scholer, Norbert, Dipl.-Ing., D-76297 Stutensee-Friedrichstal (DE)
(74) Vertreter: Hiebsch, Gerhard F., Dipl.-Ing.

(56) Entgegenhaltungen:
- EP-A- 0 209 833
- EP-A- 0 442 432
- WO-A-81/00445
- WO-A-90/00707
- DE-A- 3 247 620

## Beschreibung

Die Erfindung betrifft ein Bauwerk, das aus mehreren gesonderten, jeweils -- als Wärmeenergieabsorber wirkenden --eingebetteten Rohren für eine Energieträgerflüssigkeit enthaltende und gegebenenfalls miteinander verbundene plattenartige Betonfertigteile besteht, die radial an einer Mittelachse zu einer säulenartigen oder mehrrippigen Konstruktion zusammengesetzt sind, zumindest teilweise in Abstand zueinander verlaufen sowie mit einem Sockelteil ihrer Wärmeentzugsfläche unterirdisch angeordnet sind.

Ein Bauwerk dieser Art ist der EP-A-0442432 der Anmelderin zu entnehmen. Ausgehend von Massivabsorbersystemen in Außenwänden von Hochbauten zur Wärmeenergiegewinnung, wird dort vorgeschlagen, kreuz- oder sternförmige Bauwerke aus Absorberplatten herzustellen, welche teilweise unter der Rasenoberfläche angeordnet sind und die Aufgabe lösen, für einen möglichst kleinen freien Platz außerhalb eines Gebäudes einen Massivabsorber anzubieten, der zusätzlich aufgestellt werden kann, alle technischen und wirtschaftlichen Voraussetzungen erfüllt, nicht störend wirkt und nach Möglichkeit eine oder mehrere weitere Funktion zu übernehmen in der Lage ist.

Die WO-A-90 00 707 beschreibt einen Energietauscher, der über eine isolierende Vorlaufleitung mit einer in einem Bohrloch angeordneten Pumpe verbunden sowie beide im Bohrloch von einem unten offenen Schutzrohr umgeben sind, an das sich radial nach außen bis zur Bohrlochwandung ein Rücklaufbereich für Rücklaufwasser anschließt. Dieser enthält eine poröse Füllung, steht am Bohrlochtiefsten mit der Pumpe in Verbindung, und in ihn mündet eine Rücklaufleitung des Energietauschers, die im Bohrloch mindestens ein bis annähernd an das Bohrlochtiefste reichendes Rücklaufrohr aufweist, das mehrere über seine Länge verteilte Querverschlüsse sowie beidseits davon angeordnete Durchtrittsöffnungen enthält sowie in die poröse Füllung in jenem Rücklaufbereich eingebettet ist.

In der WO-A-81 00 445 sind Solarkollektoren in Form von mit -- auch doppellagig -- eingebetteten Rohren versehenen Betonplatten offenbart, die in Gebäude integriert oder diesen als Gartenmauern zugeordnet werden.

Bekannt ist zudem aus der CH-PS 674 045 ein Fundierungs- und Absicherungselement aus Beton als Wärmespeicher für den Anschluß an ein Heizsystem.

In Kenntnis dieses Standes der Technik hat sich der Erfinder das Ziel gesetzt, die Einsatzmöglichkeit eines solchen Bauwerkes auf möglichst kleinstem Raum zu erhöhen und die Wärmebilanz nach Möglichkeit zu verbessern.

Zur Lösung dieser Aufgabe führt die Lehre des unabhängigen Patentanspruches; die abhängigen Patentansprüche geben günstige Fortentwicklungen an.

Erfindungsgemäß werden an das Bauwerk im Boden verlegte Rohre wenigstens eine außerhalb des Bauwerkes diesem zugeordnete Wärmetauscheinrichtung als Grabenkollektor angeschlossen. Besonders günstig als Zusatz für das erfindungsgemäße Bauwerk sind Betonfertigplatten mit integrierten Rohren, die im Boden dem Sockelteil des Bauwerkes angefügt werden. Dabei sind die Vorläufe bevorzugt an das Bauwerk angefügt und die Rückläufe an einen diesem zugeordneten, an sich bekannten Verteiler angeschlossen.

Derartige Grabenkollektoren wie Betonplatten stellt man als Wärmeenergieabsorber beim Errichten des Bauwerkes in die Baugrube und schließt sie in der bereits erwähnten Art an das Rohrschlangensystem des Bauwerkes an. Vorteilhafterweise wird man diese zusätzlichen Betonfertigplatten an die geneigten Böschungswände der Baugruppe legen und dann letztere mit dem üblichen Hinterfüllmaterial schließen. Bevorzugt soll jeder im Bauwerk enthaltenen flügelartigen Platte eine solche Betonfertigplatte im Boden zugeordnet und diese an die Rohrschlange der jeweiligen Bauwerksplatte angeschlossen werden.

Im Rahmen der Erfindung liegt es aber auch, in einem -- wie gesagt, der WO-A-90 00 707 entnehmbaren -- Bohrloch eine zusätzliche wärmeträgerführende Rohrtour anzubringen, welche mit ihrem Steigrohr an das Bauwerk angeschlossen ist und zwar bevorzugt in der für die Betonfertigplatten beschriebenen Weise. Die vom Bohrlochtiefsten aufsteigende Sole fällt nach dem Durchgang durch Bauwerk und Verteiler im Fallrohr wieder ab.

Auch bei diesem Bauwerk soll bevorzugt in jede seiner Platten eine -- in zwei jeweils einer der Plattenoberfläche nahen Ebenen angeordnete -- mäanderartig gebogene Rohrschlange von 80 bis 120 m Länge eingebettet sein; als wirtschaftlichste Größe eines Absorberkreises stellt sich eine Absorberkreis-Rohrschlange von 120 bis 160 m dar.

Geht man von etwa 20 m für die Zuleitung und 20 m für die Rückführung der Absorberkreis-Rohrlänge aus, hat der Betonabsorber zwischen 80 und 120 laufende Meter (lfdm) Rohrlänge aufzunmehmen. Bei einer Belegungsdichte von 7 lfdm m je m² ergibt sich eine flächige Absorbergröße zwischen 12 und 20 m². Da bei einem freistehenden flächigem Fertigteil von beiden Flächen Wärme der Außenluft entziehbar ist -- also an beiden Flächenseiten Absorberrohre einbetoniert werden können --, ergibt sich im Mittel ein Fertigteil in der Größe von 6 m² bis 10 m². So erfüllt etwa ein Betonabsorber in den Abmessungen 1 m x 6 m diese Voraussetzungen für den Absorberkreis. Dieses Bauwerk vermag beispielsweise Pflanzengerüste aufzunehmen, die ihm ein besonders günstiges Aussehen verleihen, darüber hinaus aber auch der Aufnahme besonders wärmebedürftiger Pflanzen zu dienen vermögen.

Denkbar ist es aber auch hier wenigstens einen Absorberkreislauf des Bauwerks an eine Dusche, eine Berieselungseinrichtung od. dgl. Abgabeelemente anzuschließen.

Vorteilhafterweise werden mehr als drei Absorberkreis-Betonelemente grundrißlich als Kreuz oder in Form eines Sternes zu einer Gartensäule zusammengestellt. Die Höhe dieser Gartensäule über Erdreich wird auf unter vier Meter und deren Eingrabtiefe auf rund 2,50 m begrenzt, und die Elemente werden oberirdisch im Abstand zueinander angeordnet, damit eine Umspülung mit Luft und Wind erleichtert wird.

Das beschriebene Bauwerk wird als Energiesäule eingesetzt, kann jedoch sogar für die monovalente Heizung eines Einfamilienhauses herangezogen werden, wenn mindestens zwei weitere der erfindungsgemäß zuzuordnenden Absorberelemente ergänzend hinzukommen. Diese Energiesäule nimmt weniger als drei Meter Durchmesser im Grundriß in Anspruch, so daß sie auf nahezu jedem Grundstück aufstellbar ist.

Außer zu einem Stützgerüst für Blumenkästen oder für rankende Pflanzen kann die Säule auch zu einem im Sommer in Betrieb befindlichen Springbrunnen, Fontainenbrunnen, zu einer Duschanlage, einer Wasserzapfstelle oder zu einem Sitzplatz etc. ergänzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Schrägsicht auf ein aus Platten bestehendes säulenartiges Bauwerk;
- Fig. 2:: den Grundriß zu Fig. 1;
- Fig. 3:: die Seitenansicht einer Platte des Bauwerkes;
- Fig. 4:: eine Stirnansicht der Platte der Bauwerkes;
- Fig. 5:: die Seitenansicht gemäß Fig. 3 mit einem Rohrschlangensystem;
- Fig. 6:: einen Teil der Fig. 5 in Stirnansicht,
- Fig. 7:: eine Seitenansicht des Bauwerkes mit im Boden vorgesehenen Bauwerksteilen in schematischem Längsschnitt;
- Fig. 8:: die Draufsicht auf einen Teil der Fig. 7.

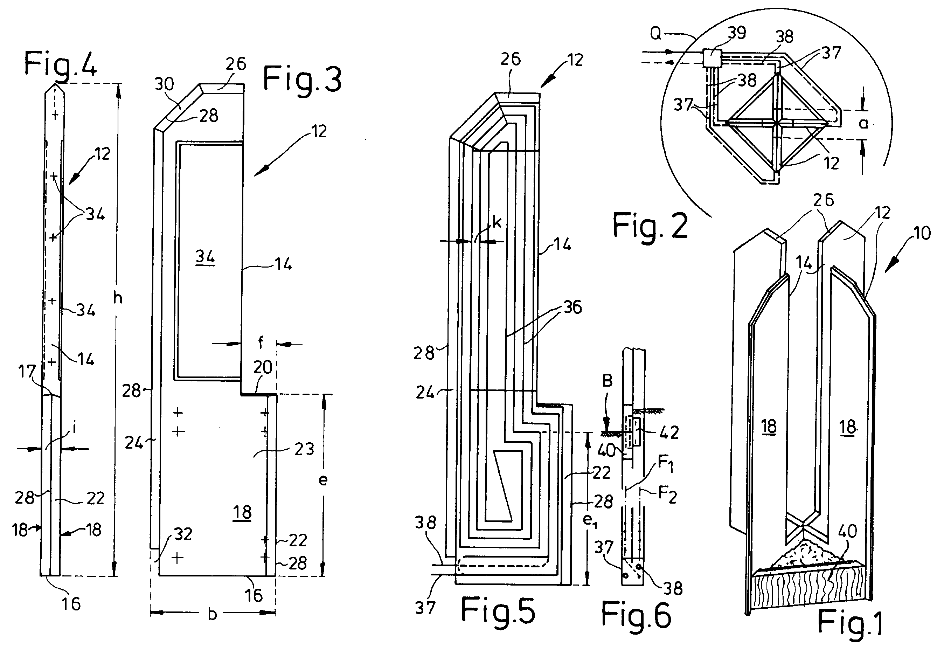

Ein säulenartiges Bauwerk 10 weist gemäß Fig. 1 vier von einem in Fig. 2 angedeuteten kreuzförmigen Grundriß aufragende Platten 12 auf, von denen jeweils zwei miteinander fluchten, deren einander zugekehrte Innenkanten 14 über dem gewachsenen Boden zueinander in einem Abstand a von beispielsweise 80 cm verlaufen.

Jede der Platten 12 einer Höhe h von beispielsweise 600 cm, einer Breite b von beispielsweise 140 cm sowie einer Dicke i von 14 bis 22 cm ist in einem Abstand e von etwa 200 cm zur Plattenunterseite 16 mit einem -- von einer Kammlinie 17 zu beiden Seitenflächen 18 hin geneigten -- schulterartigen Absatz 20 der Länge f von etwa 40 cm versehen, von dem einerseits jene Innenkante 14 und anderseits eine vom schulterartigen Absatz 20 nach unten verlaufende Schmalseite 22 ausgehen. Letztere begrenzt seitlich einen Sockelteil 23 der Platte 12.

Sowohl die Schmalseite 24 als auch die -- ebenfalls schmale -- Außenseite 24 und die Firstseite 26 der Platte 12 sind beidseits so angefast, daß von einer querschnittlichen Spitze eine Bugkante 28 gebildet wird. Zudem ist die Ecke zwischen Außenseite 24 und Firstseite 26 bei 30 gebrochen.

Im oberen Teil der Platte 12 ist eine rechteckige Vertiefungsfläche 34 vorgesehen, die an der Innenkante 14 endet.

In den Beton der Platte 12 ist ein Absorkerkreislauf aus einer Rohrschlange 36 eingebettet, der sich von einem Vorlauf 37 zu einem Rücklauf 38 erstreckt. Der Abstand k der parallelen Rohrabschnitte der Rohrschlange 36 voneinander beträgt etwa 10 cm, zudem verläuft gemäß Fig. 6 die Rohrschlange 34 in zwei zueinander parallelen Ebenen F₁,F₂.

Innerhalb eines den Grundriß in Fig. 2 umschreibenden Kreises Q ist ein Verteiler 39 vorgesehen, an dem die einzelnen Kreise zuleitungs- und fortleitungsseitig zusammengefaßt sind und von dem aus Sammelleitungen zu einer aus Gründen der Übersichtlichkeit in der Zeichnung vernachlässigten Wärmepumpe führen.

Der untere Plattenabschnitt oder Sockelteil 23 ist in einer Eingrabtiefe e₁ in das Erdreich eingelassen. Mit B ist die Erdreichoberkante bezeichnet, oberhalb deren die Platten 12 des Bauwerkes 10 durch Sockelstreifen 40 miteinander verbunden sind. Die Sockelteile 23 der Platten 12 werden durch Winkellaschen 42 aneinandergeschlossen.

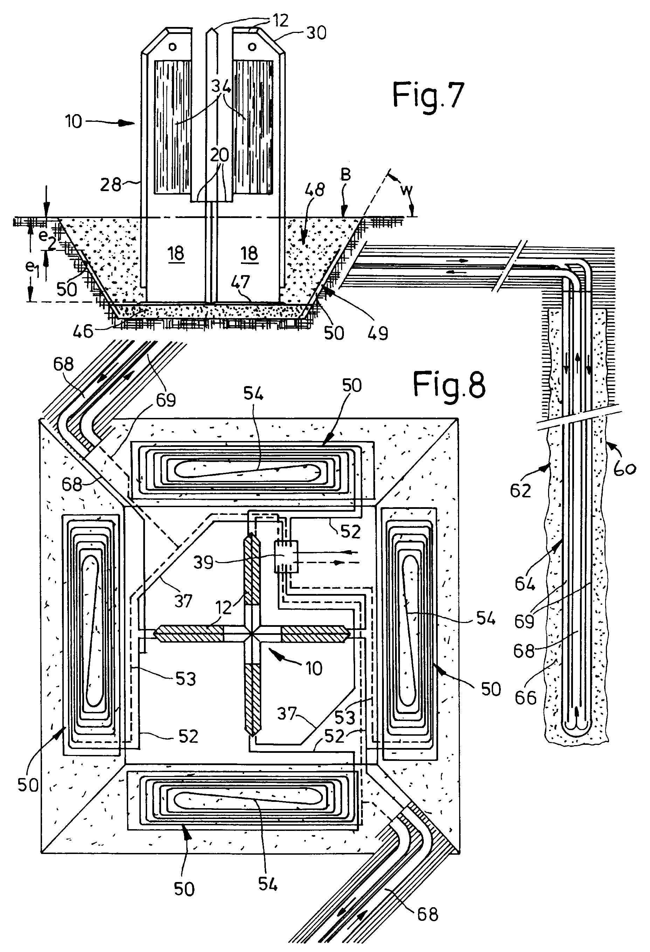

Um das entsprechend Fig. 7 auf einer Frostschutzschicht unter Zwischenschaltung eines Sandbettes 47 auf dem Grunde einer Baugrube 48 mit in einem Winkel w geneigten Böschungswänden 49 auflastende Bauwerk 12 sind auf diese Böschungswände 49 weitere als Wärmeenergieabsorber ausgebildete Platten 50 in einem Abstand e₂ zur Erdreichoberkante B von etwa 70 cm gelegt. Vorlauf 52 und Rücklauf 53 der Absorberkreisläufe oder Rohrschlangen 54 dieser Platten 50 sind an die entsprechenden Leitungen 37 bzw. 38 des Bauwerks 10 angeschlossen. Der Vorlauf 52 jeder der Platten in Fig. 8 führt zum benachbart aufragenden Sockelteil 23, dessen Vorlauf 37 am Verteiler 39 endet. Ebenfalls führen die Rückläufe 53 der Platten 50 zum Verteiler 39. Die im Erdreich liegenden Absorberplatten 50 entziehen dem Boden Wärme, und so kann ein weiterer Kreis von Wärmetauschern über das Bauwerk 10 an den Verteiler 39 -- und damit an die Energieversorgung eines nicht dargestellten Gebäudes -- angeschlossen werden.

In Fig. 7 ist bei 60 ein Bohrloch mit einer sog. Erdwärmesonde 62 skizziert; in einer Hinterfüllung 64 verlaufen bis zu einem Rohrtourtiefsten 66 Sondenrohre 68,69, durch das als Steigrohr diendende Sondenrohr 68 gelangt wärmetransportierende Sole zum Bauwerk 10 - in Fig. 8 ist dieses Steigrohr 68 an einen Vorlauf 52 einer Platte 50 angeschlossen, jedoch ist auch ein direkter Anschluß an die Rohrschlange 36 des Bauwerks 10 denkbar. So wird dem Untergrund auch in größerer Teufe Energie als Wärme- oder Kälteleistung entzogen und die Gegebenheit genutzt, einen Teufenbereich zu erschließen, in welchem ohne größere Beeinflussung von der Oberfläche her eine verhältnismäßig konstante Temperatur herrscht.

Die Sole strömt durch die Rohrschlange 36 der an das jeweilige Bohrloch 60 angeschlossenen Platte 12 zum Verteiler 39 und von diesem durch das Fallrohr 69 wieder zum Rohrtourtiefsten 66 zurück.

Die beschriebene Konstruktion erweitert die Einsatzmöglichkeiten derartiger Bauwerke 10 erheblich und verbessert die Stabilisierung der Wärmeerzeugung erheblich.

## Patentansprüche

1. Bauwerk (10) aus mehreren gesonderten, jeweils als Wärmeenergieabsorber wirkenden eingebetteten Rohren für eine Energieträgerflüssigkeit enthaltende und gegebenenfalls miteinander verbundene plattenartige Betonfertigteile (12), die radial an einer Mittelachse zu einer säulenartigen oder mehrrippigen Konstruktion zusammengesetzt sind, zumindest teilweise in Abstand zueinander verlaufen sowie mit einem Sockelteil (23) ihrer Wärmeentzugsfläche unterirdisch angeordnet sind,
dadurch gekennzeichnet,
daß an das Bauwerk (10) im Boden (48) verlegte Rohre (54) wenigstens einer außerhalb des Bauwerkes diesem zugeordneten Wärmetauscheinrichtung (50) als Grabenkollektor für Erdwärme angeschlossen sind.

2. Bauwerk nach Anspruch 1, dadurch gekennzeichnet, daß die Rohre (54) in eine Betonfertigplatte (50) als Erdwärmeenergieabsorber eingebettet und diese/r dem Sockelteil (18) des Bauwerks (10) zugeordnet ist.

3. Bauwerk nach Anspruch 2, dadurch gekennzeichnet, daß mehrere der Betonfertigplatten (50) dem Bauwerk (10) zu dessen Bodenebene (46) geneigt zugeordnet sind.

4. Bauwerk nach Anspruch 2 oder 3 mit in einer Baugrube (48) od.dgl. Ausschachtung vorgesehenem Sockelteil (23), dadurch gekennzeichnet, daß mehrere Betonfertigplatten (50) an den Böschungswänden (49) der Baugrube (48) geneigt vorgesehen sind, wobei bevorzugt jeder Platte (12) des Bauwerkes (10) eine Betonfertigplatte als Wärmeenergieabsorber zugeordnet ist.

5. Bauwerk nach einem der Ansprüche 1 bis 4, dadurch gekennzeichnet, dass die Vorläufe (37) der zugeordneten Wärmetauscheinrichtungen (50) an das Bauwerk (10) sowie die Rückläufe (38) an einen Verteiler (39) angeschlossen sind.

6. Bauwerk nach einem der Ansprüche 1 bis 5, dadurch gekennzeichnet, daß ihm eine wärmeträgerführende Rohrtour (68,90) in einem Bohrloch (60) als zusätzliche Wärmetauscheinrichtung (62) zugeordnet ist.

7. Bauwerk nach Anspruch 6, dadurch gekennzeichnet, daß der aufsteigende Strang (68) der Rohrtour mit einem Verteiler (39) und/oder dem Bauwerk (10) verbunden ist.

8. Bauwerk nach Anspruch 6 oder 7, dadurch gekennzeichnet, daß der fallende Strang (69) der Rohrtour mit dem Verteiler (39) verbunden und zum Bohrlochtiefsten (66) geführt ist.

## Claims

1. Structure (10) consisting of a plurality of separate precast concrete elements (12) in the form of panels each containing embedded pipes for an energy transfer fluid acting as thermal energy absorbers and possibly connected together, said precast concrete elements being assembled radially along a centre axis to form a columnar or multiple-rib construction, extending at least partially at a distance from one another and being arranged with a base part (23) of their heat-absorption surfaces underground, characterised in that underground (48) pipes (54) of least one outside heat exchanger (50) associated with the structure acting as trench collectors for ground heat are connected to the structure (10).

2. Structure according to claim 1, characterised in that the pipes (54) are embedded in a precast concrete panel (50) acting as a thermal energy absorber and the latter is associated with the base part (18) of the structure (10).

3. Structure according to claim 2, characterised in that several of the precast concrete panels (50) are associated with the structure (10) at an incline relative to its bottom plane (46).

4. Structure according to claim 2 or claim 3, with a base part (23) provided in a pit (48) or similar excavation, characterised in that several precast concrete panels (50) are provided at an incline on the slope walls (49) of the pit (48), one precast concrete panel acting as a thermal energy absorber preferably being associated with each panel (12) of the structure (10).

5. Structure according to one of claims 1 to 4, characterised in that the flow pipes (37) of the associated heat exchangers (50) are connected to the structure (10) and the return pipes (38) are connected to a distributor (39).

6. Structure according to one of claims 1 to 5, characterised by an associated heat transfer fluid-conducting string (68, 90) in a bore hole (60) acting as an additional heat exchanger (62).

7. Structure according to claim 6, characterised in that the ascending section (68) of the string is connected to a distributor (39) and/or the structure (10).

8. Structure according to claim 6 or claim 7, characterised in that the descending section (69) of the string is connected to the distributor (39) and runs to the bottom (66) of the bore hole.

## Revendications

1. Construction (10) constituée de plusieurs tubes indépendants qui chacun sont noyés et agissent comme absorbeurs d'énergie thermique pour des éléments préfabriqués en béton et en forme de plaques contenant un liquide servant au transport d'énergie, ces éléments étant reliés les uns aux autres le cas échéant, assemblés selon un axe médian en une structure à colonnes ou à plusieurs nervures, et placés au moins partiellement à distance les un des autres, et ces éléments comportant une partie (23) formant socle en contact souterrain avec la surface d'extraction de chaleur, caractérisé en ce que,
sur la construction (10) des tubes (54) disposés dans le fond (48) sont reliés à au moins un dispositif échangeur de chaleur (50), situé en dehors de la construction et associé à cette dernière et servant de collecteur de profondeur pour la chaleur du sol.

2. Construction selon la revendication 1, caractérisée en ce que les tubes (54) sont noyés dans une plaque de béton préfabriquée (50) destinée à servir d'absorbeur de l'énergie thermique du sol et en ce que cette plaque formant absorbeur est associée à la partie de socle (18) de la construction (10).

3. Construction selon la revendication 2, caractérisée en ce que plusieurs des plaques préfabriquées en béton (50) sont associées au construction (10) de façon inclinée par rapport au plan de fond (46) de la construction.

4. Construction selon la revendication 2 ou 3, munie d'une partie de socle (23) prévue dans une fouille (48) ou un puits de fondations, caractérisée en ce que plusieurs plaques préfabriquées en béton (50) sont prévues inclinées sur les parois de talus (49) de la fouille de fondations (48), tandis qu'à chaque plaque (12) de la construction (10) est associée de préférence une plaque préfabriquée en béton pour servir d'absorbeur d'énergie thermique.

5. Construction selon l'une des revendications 1 à 4, caractérisée en ce que les conduites d'entrée (37) des dispositifs d'échange de chaleur (50) associés sont reliées à la construction (10), tandis que les conduites de retour (38) sont reliées à un distributeur (39).

6. Construction selon l'une des revendications 1 à 5, caractérisée en ce qu'il lui est associé un circuit tubulaire (68, 90) conduisant un fluide de transport de chaleur et disposé dans un trou de forage (60) pour servir de dispositif d'échange de chaleur supplémentaire (62).

7. Construction selon la revendication 6, caractérisée en ce que la branche montante (68) du circuit tubulaire est reliée à un distributeur (39) et/ou à la construction (10).

8. Construction selon la revendication 6 ou 7, caractérisée en ce que la branche descendante (69) du circuit tubulaire est reliée au distributeur (39) et est conduite au fond (66) du trou de forage.
